# EUROPÄISCHE PATENTSCHRIFT

(11) **EP 3 387 305 B1**
(45) Veröffentlichungstag und Bekanntmachung des Hinweises auf die Patenterteilung: **08.01.2020**
(21) Anmeldenummer: 16805066.4
(22) Anmeldetag: 30.11.2016
(51) Int. Cl.: F16K 31/12, A47L 15/42, F16K 11/044, F16K 11/052, F16K 11/056, F16K 27/02, F04D 15/00, F04D 29/50

(54) **SCHALTVENTILANORDNUNG FÜR EIN WASSERFÜHRENDES HAUSHALTSGERÄT UND WASSERFÜHRENDES HAUSHALTSGERÄT**
SWITCHING-VALVE ARRANGEMENT FOR A WATER-CHANNELLING DOMESTIC APPLIANCE, AND WATER-CHANNELLING DOMESTIC APPLIANCE
SYSTÈME DE SOUPAPE DE COMMANDE POUR UN APPAREIL MÉNAGER À CIRCULATION D'EAU ET APPAREIL MÉNAGER À CIRCULATION D'EAU

(30) Priorität: 10.12.2015 DE 102015224814
(43) Veröffentlichungstag der Anmeldung: 17.10.2018
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2016/079191
(87) Internationale Veröffentlichungsnummer: WO 2017/097641

(56) Entgegenhaltungen:
- EP-A2- 1 190 666
- WO-A1-99/27836
- GB-A- 2 199 080
- US-A- 2 918 927
- US-A1- 2014 286 747

## Beschreibung

Die Erfindung betrifft eine Schaltventilanordnung für ein wasserführendes Haushaltsgerät und ein wasserführendes Haushaltsgerät, insbesondere ein Wäschebehandlungsgerät zum Waschen von Wäsche, mit einer Schaltventilanordnung. Speziell betrifft die Erfindung das Gebiet der Waschmaschinen und Waschtrockner.

Aus der DE 87 07 121 U1 ist ein Schaltventil zum Umschalten eines Fluidstroms bekannt. Das Fluid, zum Beispiel Wasser oder Luft, wird dem Ventil über einen gesteuerten Strömungskreis etwa mittels einer Pumpe beziehungsweise mittels eines Gebläses zugeführt. Das Schaltventil hat einen hohlen Körper mit einer Einlassöffnung im unteren Teil und einem ersten und einem zweiten Auslass an gegenüber liegenden Seiten. Im Bereich der Einlassöffnung und im Bereich der Auslässe sind an dem hohlen Ventilkörper auswärts hervorstehende Anschlüsse von verringertem Durchmesser ausgebildet. Der hohle Ventilkörper enthält wenigstens ein frei bewegliches Absperrelement, vorzugsweise in Form einer Kugel, welche hohl sein kann. Im Ruhezustand, das heißt solange die mit dem Ventil verbundene Strömungsquelle nicht im Betrieb ist, verharrt die Kugel unter Schwerkrafteinfluss in einer Lage nahe dem Einlass. Zu dem Ventil gehört ferner eine Steuereinrichtung mit einem in einem oberen Teil eines Innenraums angeordneten Körper, welcher waagrecht zwischen Stellungen zunächst den Auslässen hin und her bewegbar ist. An der Unterseite des Körpers sind an einander gegenüber liegenden Seiten Vertiefungen ausgebildet, welche als entsprechende Sitzbereiche für die Kugel wirksam sind. Befindet sich die den Körper umfassende Steuereinrichtung in einer gewissen Betriebsstellung und wird nun die Strömungsquelle in Betrieb gesetzt, so dass das über den Einlass in das Ventil einströmende Fluid die Kugel anhebt, dann wirkt die entsprechende Vertiefung des Körpers als Führung, um die Kugel zu einer der Auslassöffnungen zu lenken, so dass diese verschlossen wird. Dementsprechend tritt der Fluidstrom dann durch den anderen Auslass aus dem Ventil aus. Bei einer Unterbrechung des durch den Einlass eintretenden Fluidstroms fällt die Kugel unter Schwerkrafteinfluss in die Lage nahe dem Einlass zurück.

Das aus der DE 87 07 121 U1 bekannte Schaltventil hat den Nachteil, dass stets ein ausreichend großer Fluidstrom aufrechterhalten werden muss, um den Ventilkörper an der Vertiefung des Körpers zu halten, die in der jeweiligen Schaltstellung den Sitzbereich für die Kugel darstellt. Hierbei besteht auch das Problem, dass bei einer kurzzeitigen Unterbrechung oder bei Schwankungen des Fluidstroms die Position des Ventilkörpers nicht stabil ist. Somit kann es zu einem unerwünschten Springen des Absperrelements kommen, bei dem zumindest zeitweise das Fluid über den bisher geschlossenen Auslass gelangt. Ferner hat das bekannte Schaltventil den Nachteil, dass die Schaltstellung durch eine zusätzliche mechanische Steuereinrichtung eingestellt werden muss. Hierbei wird der Körper durch ein Element der Steuereinrichtung verstellt, das magnetisch mit dem Körper gekoppelt ist. Die Hin- und Herbewegung des Elements bedarf hierbei einer geeigneten Aktorik, was zusätzliche Kosten und einen zusätzlichen Platzbedarf bedingt und eine zusätzliche Fehlerquelle darstellt.

Die US 2,918,927 A1 offenbart ein anderes bekanntes Schaltventil für ein wasserführendes Haushaltsgerät.

Eine Aufgabe der Erfindung ist es, eine Schaltventilanordnung für ein wasserführendes Haushaltsgerät, die einen verbesserten Aufbau aufweist, und ein wasserführendes Haushaltsgerät mit einem verbesserten Aufbau anzugeben. Speziell ist es eine Aufgabe der Erfindung, eine Schaltventilanordnung und ein wasserführendes Haushaltsgerät mit einer Schaltventilanordnung anzugeben, wobei eine kostengünstige Ausgestaltung durch Einsparung einer Schaltaktorik und einer zugehörigen Schaltlogik ermöglicht ist.

Die Aufgabe wird gelöst durch eine Schaltventilanordnung gemäß Anspruch 1 oder Anspruch 2. Ferner wird die Aufgabe gelöst durch ein wasserführendes Haushaltsgerät, insbesondere ein Wäschebehandlungsgerät zum Waschen von Wäsche, mit solch einer Schaltventilanordnung.

Durch die in den Unteransprüchen aufgeführten Maßnahmen sind vorteilhafte Weiterbildungen der erfindungsgemäßen Schaltventilanordnung und des erfindungsgemäßen wasserführenden Haushaltsgeräts möglich.

Der Ventilraum der Schaltventilanordnung ist dazu ausgelegt, von einer Flüssigkeit durchströmt zu werden, wobei die Flüssigkeit von unten nach oben durch den ersten Eingang und/oder den zweiten Eingang und jeweils einen der Ausgänge strömt. Bei der Flüssigkeit kann es sich insbesondere um eine wässrige Flüssigkeit handeln. Wenn die Schaltventilanordnung in einem Abpumpstrang angeordnet ist, dann kann es sich bei der Flüssigkeit entsprechend einem Programmablauf insbesondere um Waschlauge und Spülwasser handeln. Die Schaltventilanordnung kann allerdings auch an einer anderen Stelle des wasserführenden Haushaltsgeräts vorgesehen sein und zum Schalten von Frischwasser dienen. Je nach Ausgestaltung der Schaltventilanordnung kann durch den Ventilschließkörper jeweils der erste Ausgang oder der zweite Ausgang verschlossen werden, wenn die Flüssigkeit einströmt und der Ventilschließkörper aufschwimmt und so gegen jeweils einen der Ausgänge bewegt wird und dort dicht sitzt, wodurch eine Ausgestaltung als Zweiwegeventil möglich ist. Hierfür kann der Ventilschließkörper in vorteilhafter Weise als schwimmfähiger Ventilschließkörper ausgestaltet sein, der in der einströmenden Flüssigkeit aufschwimmt.

Wenn das wasserführende Haushaltsgerät zur Vorbereitung eines Betriebs beispielsweise in einem Privathaushalt aufgestellt wird, und gegebenenfalls vorgesehene Transportsicherungen entfernt sind, dann befindet sich das wasserführende Haushaltsgerät in der Betriebslage. In der Betriebslage sind die einzelnen Bauteile des wasserführenden Haushaltsgeräts dann geeignet ausgerichtet, was in der Regel funktionsrelevant ist. Beispielsweise kann in eine Einspülschale geführtes Frischwasser dann durch einen Verbindungskanal nach unten in einen Laugenbehälter laufen. Ferner befindet sich dann auch ein Ausgang des Laugenbehälters an seinem bezüglich der Schwerkraft tiefsten Punkt, so dass über den Ausgang des Laugenbehälters ein Abpumpen der Lauge möglich ist. Die Schaltventilanordnung des wasserführenden Haushaltsgeräts ist in Bezug auf diese vorgegebene Betriebslage ausgerichtet. In dieser Betriebslage ist die Funktionsfähigkeit der Schaltventilanordnung gegeben. In anderen Lagen, insbesondere in einer aus der Betriebslage um 90° gekippten Lage, ist die Schaltventilanordnung nicht notwendiger Weise funktionsfähig.

Der Ventilschließkörper ist vorzugsweise als kugelförmiger oder hohlkugelförmiger Ventilschließkörper ausgestaltet. Der Ventilschließkörper kann jedoch auch von solch einer Kugelform etwas abweichend ausgestaltet sein. Insbesondere ist eine eiförmige oder elipsoidförmige Ausgestaltung möglich. Ein Durchmesser des Ventilschließkörpers ist vorzugsweise auf die Querschnitte, insbesondere Durchmesser, des ersten Ausgangs und des zweiten Ausgangs angepasst ausgestaltet. Hierbei hat der Ventilschließkörper einen entsprechend großen Durchmesser, so dass er dichtend die Ausgänge verschließen kann. Der erste Ausgang und der zweite Ausgang haben vorzugsweise den gleichen Querschnitt, insbesondere dem gleichen Durchmesser. Der Ventilschließkörper ist vorzugsweise als Hohlkörper ausgestaltet. Der Ventilschließkörper kann allerdings auch als gefüllter Körper ausgestaltet sein, insbesondere wenn er aus einem Werkstoff mit geringerer Dichte besteht als die Flüssigkeit, in der er aufschwimmen soll. Um eine Dichtwirkung an dem ersten Ausgang beziehungsweise dem zweiten Ausgang zu verbessern, ist es ferner vorteilhaft, dass der Ventilschließkörper aus einem weichelastischen Werkstoff, insbesondere Kunststoff, gefertigt ist. Hierfür können beispielsweise ein Silikon oder ein Gummiwerkstoff zum Einsatz kommen. Der Werkstoff, insbesondere Kunststoff, kann durch ein Gussverfahren in die gewünschte Form gebracht werden.

Vorteilhaft ist es auch, dass der Ventilraum in einem unteren Bereich, in dem der erste Eingang und der zweite Eingang vorgesehen sind, eine Ausgangsposition für den Ventilschließkörper ausformt, in der sich der Ventilschließkörper bei geleertem Ventilraum befindet. Dadurch kann auch in Bezug auf eventuelle Verschmutzungen oder dergleichen das gewünschte Schaltverhalten erzielt werden. Hierbei kann der Ventilraum insbesondere so ausgestaltet sein, dass der Ventilschließkörper beim Leerlaufen des Ventilraums in diese Ausgangsposition geführt wird.

Somit kann für eine Ausgestaltung, bei der der Ventilschließkörper als schwimmfähiger und aufschwimmender Ventilschließkörper ausgestaltet ist, eine zuverlässige Funktionsweise der Schaltventilanordnung gewährleistet werden.

Erfindungsgemäß sind der erste Eingang und der zweite Eingang in einem unteren Bereich des Ventilraums vorgesehen. Im Unterschied zu einer Ausgestaltung, bei der die Eingänge in einem mittleren Bereich des Ventilraums vorgesehen sind und somit seitlich in den Ventilraum münden, können durch diese vorteilhafte Ausgestaltung günstigere Strömungsverhältnisse erzielt werden, um den schwimmfähigen Ventilschließkörper, an den ersten Ausgang oder den zweiten Ausgang zu bringen. Speziell kann hierbei beim Füllen des Ventilraums sowohl über den ersten Eingang als auch über den zweiten Eingang Flüssigkeit in den Ventilraum strömen, so dass ein rasches Füllen des Ventilraums möglich ist.

Vorteilhaft ist es auch, dass der erste Ausgang, der zweite Ausgang, der erste Eingang und der zweite Eingang in einer Projektion auf eine horizontale Ebene so zueinander angeordnet sind, dass die Projektionen des ersten Ausgangs und des zweiten Ausgangs in die horizontale Ebene zumindest näherungsweise zwischen den Projektionen des ersten Eingangs und des zweiten Eingangs in die horizontale Ebene liegen, wobei die Projektion des ersten Ausgangs in die horizontale Ebene näher an der Projektion des ersten Eingangs in die horizontale Ebene liegt als an der Projektion des zweiten Eingangs in die horizontale Ebene und wobei die Projektion des zweiten Eingangs in die horizontale Ebene näher an der Projektion des zweiten Eingangs in die horizontale Ebene liegt als an der Projektion des ersten Eingangs in die horizontale Ebene. Hierdurch ist eine Anordnung gegeben, bei der über unterschiedliche Volumenströme, mit denen die Flüssigkeit über den ersten Eingang und den zweiten Eingang in den Ventilraum geführt wird, in zuverlässiger und verbesserter Weise der schwimmfähige Ventilschließkörper, gezielt entweder an den ersten Ausgang oder den zweiten Ausgang gebracht werden kann.

Erfindungsgemäß ist der Ventilschließkörper als schwimmfähiger Ventilschließkörper ausgestaltet. Der Ventilraum ist so ausgestaltet, dass der schwimmfähige Ventilschließkörper bei einem Füllen des Ventilraums über den ersten Eingang und/oder den zweiten Eingang mit einer Flüssigkeit von einem unteren Bereich des Ventilraums bis zu dem oberen Bereich durch Aufschwimmen auf der Flüssigkeit bewegbar ist. Hierbei kann über die Volumenströme, mit denen die Flüssigkeit über den ersten Eingang und/oder den zweiten Eingang in den Ventilraum geführt wird, gezielt eine Strömung beim Füllen des Ventilraums erzeugt werden, die den aufschwimmenden Ventilschließkörper verstellt. Denn durch unterschiedliche Volumenströme kann eine horizontale Kraft auf den Ventilschließkörper erzeugt werden, die den Ventilschließkörper zumindest näherungsweise in einer horizontalen Richtung verstellt. Bis der Ventilschließkörper entsprechend weit mit der Flüssigkeit gefüllt ist, resultiert daraus eine entsprechend große Verstellbewegung beziehungsweise ein entsprechend großer Verstellweg. Dadurch kann der Ventilschließkörper zuverlässig entweder an den ersten Ausgang oder an den zweiten Ausgang gebracht werden, um den jeweiligen Ausgang zu verschließen. Separate Betätigungseinrichtungen, die beispielsweise auf einer Magnetkraft oder einer mechanischen Verstellung des Ventilschließkörpers beruhen, sind somit nicht erforderlich.

Der erste Ausgang ist so ausgestaltet, dass der sich durch Aufschwimmen auf der in den Ventilraum über den ersten Eingang und/oder den zweiten Eingang eingeleiteten Flüssigkeit an dem ersten Ausgang befindende schwimmfähige Ventilschließkörper an dem ersten Ausgang fixiert ist und/oder dass der zweite Ausgang so ausgestaltet ist, dass der sich durch Aufschwimmen auf der in den Ventilraum über den ersten Eingang und/oder den zweiten Eingang eingeleiteten Flüssigkeit an dem zweiten Ausgang befindende schwimmfähige Ventilschließkörper an dem zweiten Ausgang fixiert ist. Durch die Fixierung des schwimmfähigen Ventilschließkörpers an dem ersten Ausgang beziehungsweise dem zweiten Ausgang ist eine horizontale Verschiebung des Ventilschließkörpers ab einem gewissen Niveau der in dem Ventilraum befindlichen Flüssigkeit verhindert. Es wird durch die Auftriebskraft des schwimmfähigen Ventilschließkörpers und durch die auf den Ventilkörper wirkende vom hydrostatischen Druck abhängige Kraft eine verbesserte Abdichtung an dem ersten Ausgang beziehungsweise dem zweiten Ausgang erzielt. Speziell ist es hierbei auch vorteilhaft, dass der erste Ausgang einen Aufnahmetrichter aufweist, der sich nach unten erweitert und/oder der zum zumindest teilweisen Aufnehmen des auf der in den Ventilraum über den ersten Eingang und/oder den zweiten Eingang eingeleiteten Flüssigkeit aufschwimmenden Ventilschließkörpers dient, und/oder dass der zweite Ausgang einen Aufnahmetrichter aufweist, der sich nach unten erweitert und/oder der zum zumindest teilweisen Aufnehmen des auf der in den Ventilraum über den ersten Eingang und/oder den zweiten Eingang eingeleiteten Flüssigkeit aufschwimmenden Ventilschließkörpers dient. Speziell kann zwischen solch einem Aufnahmetrichter und einem Ventilschließkörper mit einer Kugeloberfläche eine vorteilhafte Abdichtung und Positionierung realisiert werden.

Bei einer entsprechend abgewandelten Ausgestaltung ist der Ventilschließkörper in dem oberen Bereich des Ventilraums zwischen dem ersten Ausgang und dem zweiten Ausgang pendelnd aufgehängt, wobei der Ventilschließkörper in einer ersten Pendelposition den ersten Ausgang verschließt und der Ventilschließkörper in einer zweiten Pendelposition den zweiten Ausgang verschließt. Hierbei kann der Ventilschließkörper zunächst durch die jeweils vorgegebene Strömung in die erste Pendelposition beziehungsweise die zweite Pendelposition gebracht werden. Bei weiter bestehender Strömung durch den Ventilraum kann eine Fixierung des Ventilschließkörper in der ersten Pendelposition an dem ersten Ausgang beziehungsweise in der zweiten Pendelposition an dem zweiten Ausgang gewährleistet werden. Wenn die Strömung endet, dann kann mit dem Absinken des Flüssigkeitspegels im Ventilraum oder gegebenenfalls auch schneller der Ventilschließkörper zurückpendeln und somit den ersten Ausgang beziehungsweise den zweiten Ausgang wieder freigeben. Allerdings wird bei der schwimmfähigen Ausgestaltung des Ventilschließkörpers durch das Aufschwimmen der Vorgang unterstützt, bei dem der Ventilschließkörper zunächst in die jeweilige Pendelposition verstellt wird. Zusätzlich wird durch ein Aufschwimmen die Fixierung des Ventilschließkörpers an dem jeweiligen Ausgang und somit die diesbezügliche Abdichtung verbessert.

Durch eine geeignete Fixierung des Ventilschließkörpers, der aufschwimmend oder pendelnd ausgestaltet sein kann, an dem jeweiligen Ausgang wird außerdem ein Umschalten ermöglicht, bei dem sich die Volumenströme an dem ersten Ausgang und/oder dem zweiten Ausgang ändern. Speziell kann die Drehrichtung einer Pumpe umgeschaltet werden, ohne den Ventilzustand zu beeinflussen. Dies kann zum Beispiel bei wasserführenden Haushaltsgeräten, die als Waschmaschine ausgestaltet sind, ausgenutzt werden, um das Risiko eines Pumpenausfalls zu minimieren, welches durch Aufwickeln von Haaren und Flusen um eine Rotorwelle der Pumpe gegeben ist. Speziell bei einem schwimmfähigen Ventilschließkörper wird der Ventilschließkörper von der Flüssigkeitssäule am offenen Ausgang, an dem ein Steigrohr vorgesehen sein kann, noch auf dem Dichtsitz am geschlossenen Ausgang gehalten, wobei ein Absinken der Flüssigkeitssäule bei abgeschalteter Pumpe eine Weile dauert. Somit bleibt nach dem Schalten des Ventils genügend Zeit, um die Drehrichtung der Pumpe umzuschalten, ohne den Ventilzustand zu beeinflussen.

Ein Umschalten der Drehrichtung der Pumpe ist außerdem für asymmetrische Pumpen und/oder asymmetrische Ventilausgestaltungen vorteilhaft, bei denen ein gegenüber einem Hauptausgang wesentlicher kleiner Hilfsausgang im Wesentlichen einen Steuerfluidstrom trägt. Nach dem Schalten des Ventilschließkörpers kann durch Wechseln der Drehrichtung hauptsächlich der Hauptausgang benutzt werden, um so Strömungsverluste im Ventil zu minimieren.

Vorteilhaft ist es, dass eine Fördereinrichtung vorgesehen ist, die zum Einleiten von Flüssigkeit in den Ventilraum die Flüssigkeit über sowohl den ersten Eingang als auch den zweiten Eingang in den Ventilraum führt, und dass die Fördereinrichtung ausgestaltet ist, einen Anteil eines ersten Volumenstroms der Flüssigkeit, mit dem die Fördereinrichtung die Flüssigkeit über den ersten Eingang in den Ventilraum führt, beziehungsweise einen Anteil eines zweiten Volumenstroms der Flüssigkeit, mit dem die Fördereinrichtung die Flüssigkeit über den zweiten Eingang in den Ventilraum führt, in Bezug auf einen Gesamtvolumenstrom der Flüssigkeit, mit dem die Fördereinrichtung die Flüssigkeit in den Ventilraum führt, zu ändern. Über die Änderung des Anteils des ersten Volumenstroms beziehungsweise des zweiten Volumenstroms können die Strömungsverhältnisse im Ventilraum geeignet abgeändert werden, um das Ventil zu schalten. Speziell kann die Fördereinrichtung hierbei eine Pumpe aufweisen, die einen ersten Pumpenausgang und einen zweiten Pumpenausgang hat. Es sind allerdings auch andere Ausgestaltungen denkbar. Insbesondere kann die Variation der Volumenströme auch über ein Schaltventil, insbesondere ein gedrosseltes Schaltventil, erfolgen. Nicht erfindungsgemäß können der erste und zweite Eingang zusammengeführt werden, so dass sie nur noch eine gemeinsame Öffnung am Ventilraum bilden. In dieser Ausführungsform ist der erste und zweite Eingang nicht mehr als eine konstruktive Ausgestaltung sondern als Teilvolumenströme zu verstehen, die dem Ventilraum zugeführt werden sich in einem Gesamtvolumenstrom in einer durch die Teilströme bedingten Richtung ausbilden. D.h. die Teilströme bilden eine Art Wasserweiche und der der Gesamtvolumenstrom kann nun über die gemeinsame Öffnung austreten, wodurch auch die Strömungsverhältnisse im Ventilraum zum Schalten des Ventils entsprechend abgeändert werden. Entsprechend können auch nicht erfindungsgemäß der erste Pumpenausgang und zweite Pumpenausgang zu einer gemeinsamen Öffnung zusammengefasst werden, die mit der gemeinsamen Öffnung des ersten Eingangs bzw. des ersten Teilvolumenstroms und zweiten Eingangs bzw. des zweiten Teilvolumenstroms verbunden ist.

Vorteilhaft ist es insbesondere, dass in einer ersten Betriebsart der Fördereinrichtung der erste Volumenstrom der Flüssigkeit größer ist als der zweite Volumenstrom der Flüssigkeit und dass in einer zweiten Betriebsart der Fördereinrichtung der erste Volumenstrom der Flüssigkeit kleiner ist als der zweite Volumenstrom der Flüssigkeit. Speziell kann die Fördereinrichtung hierbei so ausgestaltet sein, dass beim Einleiten von Flüssigkeit in den Ventilraum der erste Volumenstrom stets positiv ist und der zweite Volumenstrom stets positiv ist. Bei einem positiven ersten Volumenstrom beziehungsweise einem positiven zweiten Volumenstrom wird über den jeweiligen Volumenstrom Flüssigkeit in den Ventilraum eingeleitet. Wenn sowohl der erste Volumenstrom als auch der zweite Volumenstrom positiv sind, dann kann ein schnelles Auffüllen des Ventilraums erreicht werden. Allerdings sind auch Ausgestaltungen denkbar, bei denen entweder der erste Volumenstrom oder der zweite Volumenstrom verschwindet, so dass an dem diesbezüglichen Eingang des Ventilraums keine Flüssigkeit zugeführt wird. Falls einer der Volumenströme sogar negativ ist, dann kommt es aufgrund des negativen Volumenstroms sogar zu einem Abfluss von Flüssigkeit aus dem Ventilraum. Hierdurch kann zwar eine größere Strömung zum Verstellen des Ventilschließkörpers erreicht werden, das Auffüllen des Ventilraums dauert dann aber aufgrund des reduzierten Gesamtvolumenstroms entsprechend länger.

Vorteilhaft ist es ferner, dass die Fördereinrichtung eine Radialpumpe aufweist, dass eine erste Drehrichtung der Radialpumpe und eine zweite Drehrichtung der Radialpumpe wählbar sind, die gegenläufig zueinander orientiert sind, dass ein erster Pumpenausgang der Radialpumpe, der zu dem ersten Eingang führt, in der ersten Drehrichtung orientiert ist und dass ein zweiter Pumpenausgang der Radialpumpe, der zu dem zweiten Eingang führt, in der zweiten Drehrichtung der Radialpumpe orientiert ist. Bei der Radialpumpe wird der Volumenstrom zum Teil durch die radiale Beschleunigung der rotierenden Flüssigkeit erzeugt. Zum Teil wird der Volumenstrom auch über die Drehrichtung der Radialpumpe erzeugt, was zu einem Anteil führt, der zu dem radialen Anteil addiert oder von diesem subtrahiert wird. Somit kann in Abhängigkeit von der Drehrichtung der Radialpumpe der erste Volumenstrom am ersten Eingang beziehungsweise der zweite Volumenstrom am zweiten Eingang variiert werden. Durch eine entsprechende Ausgestaltung der Fördereinrichtung kann hierbei erzielt werden, dass sowohl der erste Volumenstrom am ersten Eingang als auch der zweite Volumenstrom am zweiten Eingang stets positiv sind, wenn die Fördereinrichtung die Flüssigkeit fördert.

Außerdem ist es vorteilhaft, dass ein gemeinsames Gehäuse vorgesehen ist, in dem der Ventilraum ausgestaltet ist und in dem die Fördereinrichtung untergebracht ist. Dadurch ist eine kompakte Ausgestaltung möglich.

Somit kann in vorteilhafter Weise eine Radialpumpe vorgesehen sein, deren Drehrichtung sich wählen lässt und die außerdem über zwei gegenläufige tangentiale Pumpenausgänge (Auslässe) verfügt. Die Wahlmöglichkeit der Drehrichtung ist insbesondere bei einem Einsatz von bürstenlosen Gleichstrommotoren als Pumpenantrieb für die Radialpumpe gegeben. Somit können bei der Radialpumpe zwei Anteile zum jeweiligen Volumenstrom am ersten Pumpenausgang beziehungsweise am zweiten Pumpenausgang beitragen. Zum einen ein radialer Anteil, der durch die Fliehbeschleunigung gegeben ist. Die Fliehbeschleunigung auf ein kleines Volumenelement ergibt sich hierbei aus dem Produkt mit einem Multiplikator, der gleich der Radius der Kreisbahn des Volumenelements ist, und einem Multiplikand, der gleich dem Quadrat der Winkelgeschwindigkeit des Volumenelements ist. Zum anderen ein tangentialer Anteil, der durch die Umfangsgeschwindigkeit des Volumenelements gegeben ist, wobei sich die Umfangsgeschwindigkeit (Bahngeschwindigkeit) des Volumenelements als Produkt aus dem Radius der Kreisbahn des Volumenelements und der Winkelgeschwindigkeit des Volumenelements ergibt. Hierbei hängt es von den Vorzeichen der Winkelgeschwindigkeit in Bezug auf die tangentiale Ausrichtung des jeweiligen Pumpenauslasses ab, ob sich die beiden Anteile zum jeweiligen Volumenstrom ergänzen oder gegeneinander wirken.

Bei einer Drehrichtungsumkehr der Radialpumpe kehrt sich das Vorzeichen der Winkelgeschwindigkeit des Volumenelements um. Somit kehrt sich auch das Vorzeichen des tangentialen Anteils bezüglich einer tangentialen Richtung um. Der radiale Anteil ist hingegen stets positiv. Vorzugsweise ist die Radialpumpe deutlich in Richtung Radialanteil ausgestaltet, so dass der radiale Beitrag zum Volumenstrom am ersten Pumpenausgang beziehungsweise am zweiten Pumpenausgang stets den tangentialen Anteil überwiegt. Die zu pumpende Flüssigkeit tritt somit generell aus beiden Pumpenausgängen aus, was aber mit einem von der Drehrichtung abhängigen Verhältnis der Volumenströme erfolgt. Dieses Verhältnis kehrt sich mit der Drehrichtung der Pumpe um.

Ferner können in Abhängigkeit von der Ausgestaltung der Schaltventilanordnung eine oder mehrere weitere Varianten realisiert werden. Durch eine asymmetrische Ausgestaltung des Ventilraums kann eine Hauptförderrichtung der Fördereinrichtung vorgegeben werden. Der schwimmfähige Ventilschließkörper steigt dann auch ohne zusätzliche Querströmung in den passenden Dichtsitz an einem der Ausgänge. Dadurch kann in der Hauptrichtung der sonst durch die Querströmung bei symmetrischer Flutung verursachte Effizienzverlust der Fördereinrichtung minimiert werden. Denn die Querströmung ist ein partieller Kurzschluss der Volumenströme. Zum Auswählen des Nebenventilsitzes am anderen Ausgang wird dann durch Umschalten der Drehrichtung eine durch die konstruktiven Merkmale des Ventilraums gegebene, nur geringe Querströmung erzeugt.

Im Fall einer Fördereinrichtung mit einem bürstenlosen Gleichstrommotor können die Strömungsverhältnisse und die Anstiegszeit des Flüssigkeitsspiegels im Ventilraum zusätzlich durch die Geschwindigkeit eines Pumpenmotors oder dergleichen beeinflusst werden. Beispielsweise kann im Fall einer asymmetrischen Ausgestaltung des Ventilraums, bei der ein Ausgang als Hauptauslass und der andere Ausgang als deutlich kleinerer Hilfsauslass ausgestaltet sind, beispielsweise bei Benutzung des Hilfsauslasses die Kammer langsamer gefüllt werden, um dem Ventilschließkörper mehr Zeit zu geben, in die passende Richtung zu driften.

Wenn ein gemeinsames Gehäuse vorgesehen ist, dann können gewissermaßen das Ventilgehäuse und ein Pumpenkopf als integriertes Bauteil ausgestaltet sein.

Für eine definierte Neutrallage, insbesondere eine vorgegebene Ausgangsposition, für den Ventilschließkörper und/oder einen definierten Bewegungsbereich des Ventilschließkörpers können Führungselemente im oder an der Wand des Ventilraums vorgesehen sein. Solche Führungselemente können beispielsweise als Rippen ausgeführt sein.

Bei einer Fördereinrichtung mit bürstenlosem Gleichstrommotor lässt sich beispielsweise über den Motorstrom zumindest näherungsweise der tatsächlich geförderte Gesamtvolumenstrom erfassen. Durch eine asymmetrische Gestaltung der beiden Pumpenausgänge und die damit gegebene Asymmetrie der beiden Volumenströme lässt sich der tatsächliche Schaltzustand des Ventils der Schaltventilanordnung beziehungsweise ein Fehler im Schaltzustand feststellen und es können gegebenenfalls geeignete Maßnahmen eingeleitet werden. Als Maßnahmen kommen beispielsweise die Ausführung eines Reinigungsprogramms oder die Anzeige eines Reinigungshinweises für einen Benutzer in Frage.

Ferner kann die korrekte Lage des Ventilschließkörpers auch durch zumindest einen zusätzlichen Sensor erfasst werden.

Wenn der Ventilschließkörper pendelnd aufgehängt ist, ist der Ventilschließkörper mit einem Schwimmkörper versehene Klappe ausgestaltet, die auf einer vorzugsweise knapp unter den Dichtsitzen am ersten Ausgang und am zweiten Ausgang in der Mitte angebrachten Achse gehalten wird und bei leerem Ventilraum nach unten hängt. Das Gleichgewicht solch einer Klappe wird mit sich füllendem Ventilraum zunehmend labil beziehungsweise bistabil, das heißt, die Klappe treibt beim Befüllen des Ventilraums in eine von zwei möglichen stabilen Lagen und verschließt bei weiterem Auftreiben den zugehörigen Dichtsitz.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
- Fig. 1A: eine Schaltventilanordnung für ein wasserführendes Haushaltsgerät in einer auszugsweisen, schematischen Schnittdarstellung entsprechend einem ersten Ausführungsbeispiel der Erfindung am Beginn eines Schaltvorgangs;
- Fig. 1B: die in Fig. 1A dargestellte Schaltventilanordnung des ersten Ausführungsbeispiels während dem Schaltvorgang;
- Fig. 1C: die in Fig. 1A dargestellte Schaltventilanordnung des ersten Ausführungsbeispiels am Ende des Schaltvorgangs;
- Fig. 2: eine als Radialpumpe ausgestaltete Fördereinrichtung einer Schaltventilanordnung in einer auszugsweisen, schematischen Schnittdarstellung zur Erläuterung der Funktionsweise eines möglichen Ausführungsbeispiels der Erfindung;
- Fig. 3A: eine Schaltventilanordnung für ein wasserführendes Haushaltsgerät in einer auszugsweisen, schematischen Schnittdarstellung entsprechend einem zweiten Ausführungsbeispiel der Erfindung am Beginn eines Schaltvorgangs;
- Fig. 3B: die in Fig. 3A dargestellte Schaltventilanordnung des zweiten Ausführungsbeispiels während dem Schaltvorgang und
- Fig. 3C: die in Fig. 3A dargestellte Schaltventilanordnung des zweiten Ausführungsbeispiels am Ende des Schaltvorgangs.

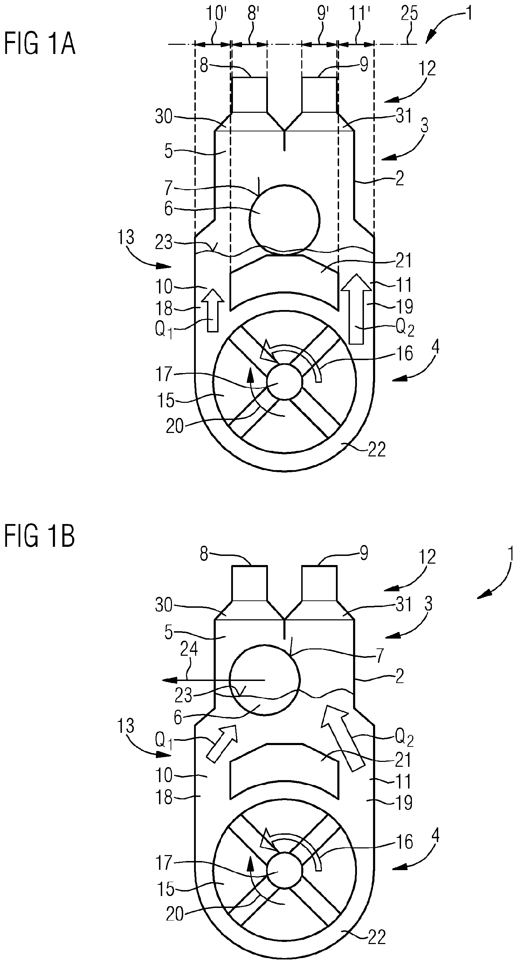

Fig. 1A zeigt eine Schaltventilanordnung 1 für ein wasserführendes Haushaltsgerät in einer auszugsweisen, schematischen Schnittdarstellung entsprechend einem ersten Ausführungsbeispiel am Beginn eines Schaltvorgangs. Ein wasserführendes Haushaltsgerät der Erfindung kann eine oder mehrere solcher Schaltventilanordnungen 1 aufweisen. Die Schaltventilanordnung 1 weist ein Gehäuse 2 auf, das ein Ventil 3 und eine Fördereinrichtung 4 aufnimmt. Die Schaltventilanordnung 1 weist einen Ventilraum 5 des Ventils 3 auf, der in dem Gehäuse 2 ausgestaltet ist. Somit sind in dem Gehäuse 2 sowohl der Ventilraum 5 ausgestaltet als auch die Fördereinrichtung 4 untergebracht, so dass das Gehäuse 2 als gemeinsames Gehäuse 2 dient.

In dem Ventilraum 5 ist ein Ventilschließkörper 6 angeordnet. Der Ventilschließkörper 6 weist in diesem Ausführungsbeispiel eine Kugeloberfläche 7 auf. Der Ventilschließkörper 6 kann hierbei kugelförmig oder hohlkugelförmig ausgestaltet sein.

Dem Ventilraum 5 sind ein erster Ausgang 8 und ein zweiter Ausgang 9 zugeordnet. Ferner sind dem Ventilraum 5 ein erster Eingang 10 und ein zweiter Eingang 11 zugeordnet. In der Betriebslage der Schaltventilanordnung 1 sind der erste Ausgang 8 und der zweite Ausgang 9 in einem oberen Bereich 12 des Ventilraums 5 angeordnet. Ferner sind dann der erste Eingang 10 und der zweite Eingang 11 in einem unteren Bereich 13 des Ventilraums 5 angeordnet. Insbesondere sind der erste Eingang 10 und der zweite Eingang 11 somit in der Betriebslage unter dem oberen Bereich 12 des Ventilraums 5 angeordnet.

Die Fördereinrichtung 4 weist eine Radialpumpe 15 mit wechselbarer Drehrichtung auf. Hierbei ist eine Situation dargestellt, in der die Radialpumpe 15 in einer Drehrichtung 16 arbeitet. Ein nicht dargestellter Einlass der Radialpumpe 15 liegt vorzugsweise über einer Achse 17 der Radialpumpe 15. Die Radialpumpe 15 weist einen ersten Pumpenausgang 18 und einen zweiten Pumpenausgang 19 auf. Der erste Pumpenausgang 18 führt zu dem ersten Eingang 10 des Ventilraums 5. Der zweite Pumpenausgang 19 führt zu dem zweiten Eingang 11 des Ventilraums 5.

Der zweite Pumpenausgang 19 ist in der Drehrichtung 16 orientiert. Speziell kann der zweite Pumpenausgang 19 hierbei tangential orientiert sein. Der erste Pumpenausgang 18 ist entgegen der Drehrichtung 16 orientiert. Hierbei kann der erste Pumpenausgang 18 speziell tangential orientiert sein. Somit ist der erste Pumpenausgang 18 in einer ersten Drehrichtung 20 orientiert, die entgegen der Drehrichtung 16 orientiert ist. Der zweite Pumpenausgang 19 ist in der zweiten Drehrichtung 16 orientiert, die zur Beschreibung der Funktionsweise als Drehrichtung 16 der Radialpumpe 15 gewählt ist. Der umgekehrte Fall, in dem die erste Drehrichtung 20 gewählt ist, ergibt sich hierbei in entsprechender Weise.

Fig. 1A zeigt den Ventilschließkörper 6 in einer Ausgangsposition. In diesem Ausführungsbeispiel ist in dem Gehäuse 2 ein Trennelement 21 vorgesehen, das den Ventilraum 5 von einem Innenraum 22 der Radialpumpe 15 trennt. Hierbei können geeignete Führungselemente vorgesehen sein, um den Ventilschließkörper 6 in seine Ausgangsposition zu führen bzw. in der Ausgangsposition zu halten. In diesem Ausführungsbeispiel liegt der Ventilschließkörper 6 in der Ausgangsposition oben auf dem Trennelement 21 auf. Der Ventilschließkörper 6 befindet sich hierbei zumindest näherungsweise mittig und etwas oberhalb zwischen dem ersten Eingang 10 und dem zweiten Eingang 11. Durch die Rotation der Radialpumpe 15 wird die Flüssigkeit sowohl über den ersten Eingang 10 als auch über den zweiten Eingang 11 in den Ventilraum 5 geführt. Aufgrund der gewählten Drehrichtung 16 ist ein erster Volumenstrom Q₁ der Flüssigkeit, mit dem die Fördereinrichtung 4 die Flüssigkeit über den ersten Eingang 10 in den Ventilraum 5 führt, kleiner als ein zweiter Volumenstrom Q₂, mit dem die Fördereinrichtung 4 die Flüssigkeit über den zweiten Eingang 11 in den Ventilraum 5 führt. Der Gesamtvolumenstrom ergibt sich hierbei als Summe aus dem ersten Volumenstrom Q₁ und dem zweiten Volumenstrom Q₂. Wird anstelle der zweiten Drehrichtung 16 die erste Drehrichtung 20 gewählt, dann kehren sich die Verhältnisse um, so dass dann der erste Volumenstrom Q₁ größer ist als der zweite Volumenstrom Q₂. Beim Einleiten der Flüssigkeit in den Ventilraum 5 steigt eine Flüssigkeitsoberfläche (Oberfläche) 23 der Flüssigkeit an. Der schwimmfähige Ventilschließkörper 6 beginnt ab einem gewissen Niveau der Flüssigkeit dann auf der Flüssigkeit aufzuschwimmen.

Fig. 1B zeigt die in Fig. 1A dargestellte Schaltventilanordnung 1 des ersten Ausführungsbeispiels während dem Schaltvorgang. Wenn die Flüssigkeit in dem Ventilraum 5 ansteigt, dann schwimmt der Ventilschließkörper 6 an der Flüssigkeitsoberfläche 23 auf. Der Ventilraum 5 ist so ausgestaltet, dass der schwimmfähige Ventilschließkörper 6 beim Füllen des Ventilraums 5 mit Flüssigkeit von dem unteren Bereich 13 zu dem oberen Bereich 12 durch Aufschwimmen auf der Flüssigkeit bewegbar ist, wobei zumindest ab einem gewissen Flüssigkeitsniveau auch eine horizontale Bewegbarkeit des Ventilschließkörpers 6 gegeben ist. Durch den größeren zweiten Volumenstrom Q₂ wird der Ventilschließkörper 6 in diesem Ausführungsbeispiel auf der Flüssigkeitsoberfläche 23 in einer Richtung 24 bewegt. Somit gelangt der Ventilschließkörper 6 nach und nach zu dem ersten Ausgang 8.

Wie in der Fig. 1A veranschaulicht, sind die Ausgänge 8, 9 und die Eingänge 10, 11 auf vorteilhafter Weise zueinander angeordnet. Hierbei sind der erste Ausgang 8, der zweite Ausgang 9, der erste Eingang 10 und der zweite Eingang 11 in einer Projektion auf eine beliebige horizontale Ebene 25 so zueinander angeordnet, dass die Projektion 8' des ersten Ausgangs 8 und die Projektion 9' des zweiten Ausgangs 9 in die horizontale Ebene 25 zwischen der Projektion 10' des ersten Eingangs 10 und der Projektion 11' des zweiten Eingangs 11 in die horizontale Ebene 25 liegen, wobei die Projektion 8' des ersten Ausgangs 8 in die horizontale Ebene 25 näher an der Projektion 10' des ersten Eingangs 10 in die horizontale Ebene 25 liegt als an der Projektion 11' des zweiten Eingangs 11 in die horizontale Ebene 25 und wobei die Projektion 9' des zweiten Ausgangs 9 in die horizontale Ebene 25 näher an der Projektion 11' des zweiten Eingangs 11 in die horizontale Ebene 25 liegt als an der Projektion 10' des ersten Eingangs 10 in die horizontale Ebene 25. Hierbei können sich die Projektionen 8', 10' des ersten Ausgangs 8 und des ersten Eingangs 10 in die horizontale Ebene 25 auch überlappen. Ferner können sich auch die Projektionen 9', 11' des zweiten Ausgangs 9 und des zweiten Eingangs 11 in die horizontale Ebene 25 überlappen. Darüber hinaus sind weitere räumliche Anordnungen der Ausgänge 8, 9 und der Eingänge 10, 11 zueinander möglich. Beispielsweise könnte auch die Projektion 10' des ersten Eingangs 10 und die Projektion 11' des zweiten Eingangs 11 in die horizontale Ebene 25 zwischen der Projektion 8' des ersten Ausgangs 8 und der Projektion 9' des zweiten Ausgangs 9 in die horizontale Ebene 25 liegen. Ferner könnten die jeweiliegen Projektionen der Ein- und Ausgänge jeweils in beliebiger Kombination rechts oder links neben der anderen oder auf der horizontalen Ebene sogar beliebig zueinander angeordnet liegen.

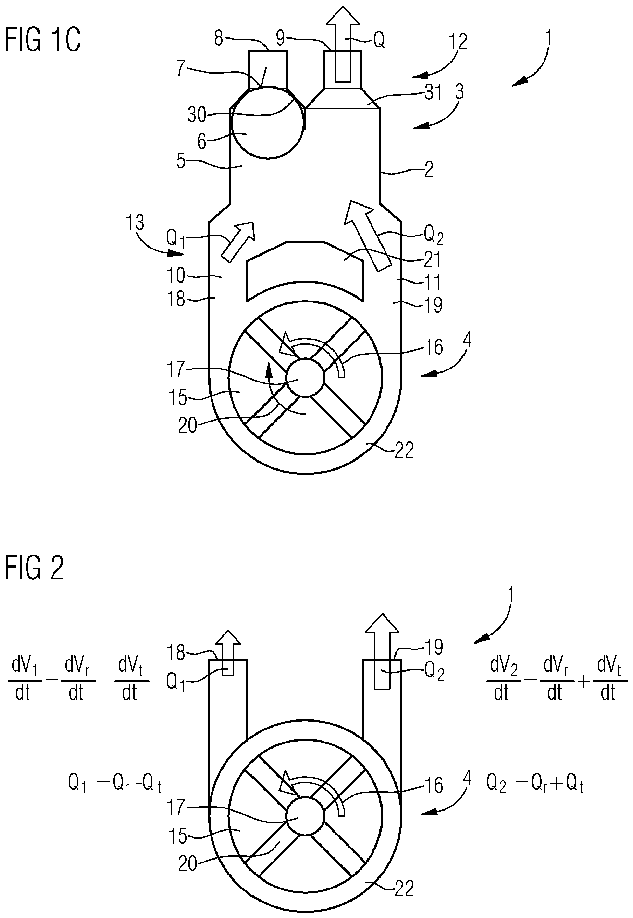

Fig. 1C zeigt die in Fig. 1A dargestellte Schaltventilanordnung 1 des ersten Ausführungsbeispiels am Ende des Schaltvorgangs. Am Ende des Schaltvorgangs ist der Ventilschließkörper 6 aufgrund der gewählten Drehrichtung 16 am ersten Ausgang 8 angeordnet. Hierbei ist der erste Ausgang 8 so ausgestaltet, dass der aufschwimmende Ventilschließkörper 6 fixiert ist. In diesem Ausführungsbeispiel weist der erste Ausgang 8 einen Aufnahmetrichter 30 auf, der sich nach unten erweitert und der zum teilweisen Aufnehmen des Ventilschließkörpers 6 dient. In entsprechender Weise ist auch der zweite Ausgang 9 so ausgestaltet, dass am Ende des anderen Schaltvorgangs, der in der ersten Drehrichtung 20 der Radialpumpe 15 erfolgt, der aufschwimmende Ventilschließkörper 6 an dem zweiten Ausgang 9 fixiert ist. Hierbei weist der zweite Ausgang 9 einen Aufnahmetrichter 31 auf, der sich nach unten erweitert und der zum teilweisen Aufnehmen des aufschwimmenden Ventilschließkörpers 6 dient.

Wie in der Fig. 1C dargestellt, wird zwischen dem Ventilschließkörper 6 und dem Aufnahmetrichter 30 des ersten Ausgangs 8 ein Dichtsitz gebildet, so dass die über den ersten Eingang 10 und den zweiten Eingang 11 zugeführte Flüssigkeit zu einem Gesamtvolumenstrom Q führt, der sich aus dem ersten Volumenstrom Q₁ und dem zweiten Volumenstrom Q₂ zusammensetzt.

Für den Schaltvorgang ist es vorteilhaft, dass der Ventilschließkörper 6 auf der Flüssigkeitsoberfläche 23 frei driften kann, so dass für eine Querbewegung des Ventilschließkörpers 6 nur geringe Kräfte erforderlich sind. Somit kann durch die vorgesehene asymmetrische Flutung des Ventilraums 5 eine Querströmung eingestellt werden, die den Ventilschließkörper 6 mitnimmt. Die Richtung der Querströmung ist durch die gewählte Drehrichtung 16, 20 bestimmt. Wenn der Ventilschließkörper 6 dann am ersten Ausgang 8 oder am zweiten Ausgang 9 angekommen ist, dann wird er durch den Auftrieb, den Druck der Wassersäule im aktuell versorgten Steigrohr sowie den sich ergebenden Staudruck durch die strömende Flüssigkeit festgehalten. Das Ventil 3 der Schaltventilanordnung 1 ist somit selbsthaltend ausgeführt. Beim Abschalten der Radialpumpe 15 sinkt die Flüssigkeitsoberfläche 23 durch die in das wasserführende Haushaltsgerät zurückfließende Flüssigkeit wieder ab. Damit sinkt auch der Ventilschließkörper 6 in dem Ventilraum 5 in Richtung des unteren Bereichs 13, insbesondere in die neutrale Ausgangsposition, die in der Fig. 1 dargestellt ist. Zum Halten des Ventilschließkörpers 6 in seiner Neutrallage bzw. zum einfacheren Positionieren des Ventilschließkörpers 6 bei seiner Bewegung zur Neutrallage hin können zusätzlich in dem Ventilraum 5 die geeigneten, nicht dargestellten Führungselemente vorgesehen sein. Zumindest das Ventil 3 der Schaltventilanordnung 1 ist in dem wasserführenden Haushaltsgerät in einer geeigneten Montagehöhe vorgesehen, damit sich der Ventilraum 5 durch die zurückfließende Flüssigkeit zumindest bis auf eine Neutrallage des Ventilschließkörpers 6, insbesondere die neutrale Ausgangsposition, entleeren kann.

Fig. 2 zeigt eine als Radialpumpe 15 ausgestaltete Fördereinrichtung 4 einer Schaltventilanordnung 1 in einer auszugsweisen, schematischen Schnittdarstellung zur Erläuterung der Funktionsweise eines möglichen Ausführungsbeispiels der Erfindung. In Bezug auf die gewählte Drehrichtung 16 ergibt sich am ersten Pumpenausgang 18 ein erster Volumenstrom Q₁. Ferner ergibt sich am zweiten Pumpenausgang 19 ein zweiter Volumenstrom Q₂. Der erste Volumenstrom Q₁ kann hierbei im quasi-statischen Fall als das Volumen V₁ beschrieben werden, das pro Zeiteinheit aus dem ersten Pumpenausgang 18 austritt beziehungsweise durch eine gedachte Querschnittsfläche hindurch tritt. Im Grenzfall ergibt sich der erste Volumenstrom Q₁ als zeitliche Ableitung des aus dem ersten Pumpenausgang 18 austretenden Volumens V₁. Entsprechend ergibt sich der zweite Volumenstrom Q₂ als zeitliche Ableitung des aus dem zweiten Pumpenausgang 19 austretenden Volumens V₂. Der erste Volumenstrom Q₁ und der zweite Volumenstrom Q₂ können hierbei jeweils in einen radialen Anteil Qᵣ und einen tangentialen Anteil Qₜ aufgeteilt werden. Der radiale Anteil Qᵣ hängt von der Umdrehung beziehungsweise Winkelgeschwindigkeit der Radialpumpe 15 ab und ist unabhängig von der gewählten Drehrichtung 16, 20. Hingegen ist der tangentiale Anteil Qₜ abhängig von der Drehrichtung 16, 20. Denn in Bezug auf die zur Erläuterung gewählte Drehrichtung 16 wird der tangentiale Anteil Qₜ zur Bestimmung des ersten Volumenstroms Q₁ mit einem negativen Vorzeichen berücksichtigt, während er bei dem zweiten Volumenstrom Q₂ mit einem positiven Vorzeichen berücksichtigt wird. Dies liegt daran, dass der erste Pumpenausgang 18 entgegen der gewählten Drehrichtung 16 orientiert ist, während der zweite Pumpenausgang 19 in der gewählten Drehrichtung 16 orientiert ist. Allerdings ist die Radialpumpe 15 in diesem Ausführungsbeispiel so ausgestaltet, dass der radiale Anteil Qᵣ stets größer als der tangentiale Anteil Qₜ ist. Daher sind sowohl der erste Volumenstrom Q₁ als auch der zweite Volumenstrom Q₂ stets positiv.

In einer zweiten Betriebsart der Schaltventilanordnung 1, die anhand der Fig. 2 veranschaulicht ist, ist der erste Volumenstrom Q₁ somit kleiner als der zweite Volumenstrom Q₂ der Flüssigkeit. In einer ersten Betriebsart der Fördereinrichtung 4, bei der die Radialpumpe 15 in der ersten Drehrichtung 20 betrieben wird, ist der erste Volumenstrom Q₁ größer als der zweite Volumenstrom Q₂.

Der radiale Anteil Qᵣ des Volumenstroms kann als zeitliche Ableitung des Volumens Vᵣ beschrieben werden, die in der Summe über den ersten Pumpenausgang 18 und den zweiten Pumpenausgang 19 austritt. Der radiale Anteil Qᵣ stimmt somit in diesem Ausführungsbeispiel mit dem Gesamtvolumenstrom Q überein. Bei dem tangentialen Anteil Qₜ handelt es sich um den drehrichtungsabhängigen Teil, der als zeitliche Ableitung der Mehr- oder Mindermenge Vₜ aufgrund der gewählten Drehrichtung 16, 20 zu berücksichtigen ist.

In diesem Ausführungsbeispiel sind der erste Pumpenausgang 18 und der zweite Pumpenausgang 19 jeweils als tangentiale Pumpenausgänge 18, 19 orientiert. Somit kommt der Effekt des tangentialen Anteils Qₜ besonders ausgeprägt zum Tragen. Es sind allerdings auch abgewandelte Ausgestaltungen denkbar, bei denen zumindest ein Pumpenausgang 18, 19 nicht exakt tangential orientiert ist, sofern die Abhängigkeit der Volumenströme Q₁, Q₂ von der gewählten Drehrichtung 16, 20 besteht.

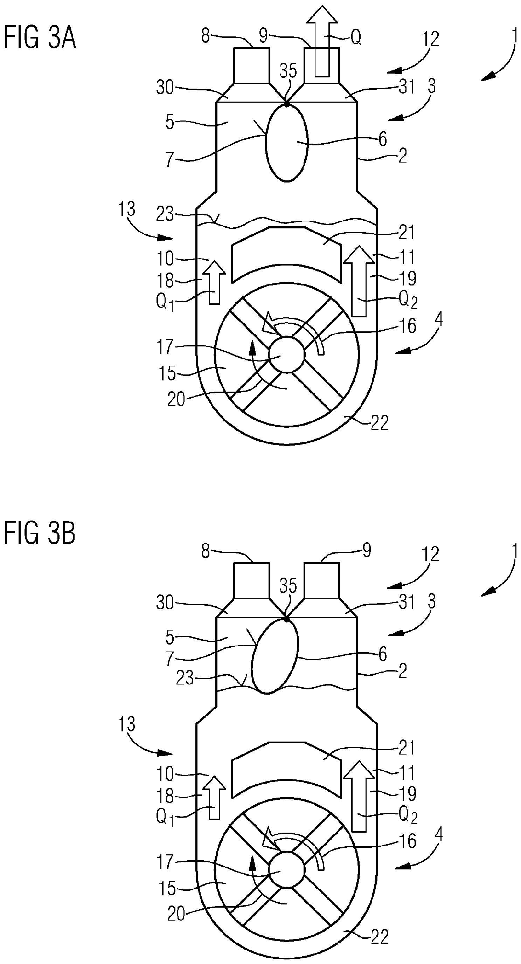

Fig. 3A zeigt eine Schaltventilanordnung 1 für ein wasserführendes Haushaltsgerät in einer auszugsweisen, schematischen Schnittdarstellung entsprechend einem zweiten Ausführungsbeispiel der Erfindung am Beginn eines Schaltvorgangs. Hierbei ist die zweite Drehrichtung 16 gewählt. In diesem Ausführungsbeispiel ist der Ventilschließkörper 6 in dem oberen Bereich 13 des Ventilraums zwischen dem ersten Ausgang 8 und dem zweiten Ausgang 9 an einer Befestigungsstelle 35 pendelnd aufgehängt. Die Befestigungsstelle 35 ist in diesem Ausführungsbeispiel durch eine Achse 35 gebildet. Der Ventilschließkörper 6 ist hierbei als schwimmfähiger Ventilschließkörper 6 ausgestaltet. Der Ventilschließkörper 6 kann hierbei auch als Klappe mit einem Schwimmkörper ausgestaltet sein.

Fig. 3B zeigt die in Fig. 3A dargestellte Schaltventilanordnung 1 des zweiten Ausführungsbeispiels während dem Schaltvorgang. Hierbei wird die Flüssigkeit zunehmend in dem Ventilraum eingeleitet, so dass die Flüssigkeitsoberfläche 23 ansteigt. Da der erste Volumenstrom Q₁ kleiner als der zweite Volumenstrom Q₂ ist, bewegt sich der Ventilschließkörper 6 aufgrund der dadurch initiierten Querströmung zu dem ersten Ausgang 8. Aufgrund der pendelnden Aufhängung kommt es somit zu einer Pendelbewegung hin zu dem ersten Ausgang 8.

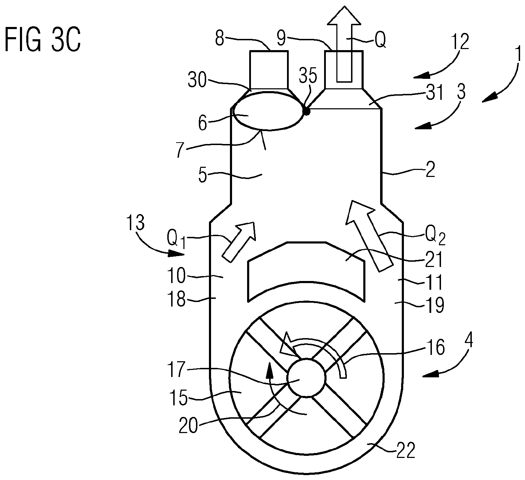

Fig. 3C zeigt die in Fig. 3A dargestellte Schaltventilanordnung 1 des zweiten Ausführungsbeispiels am Ende des Schaltvorgangs. Im aufgefüllten Zustand des Ventilraums 5 befindet sich der Ventilschließkörper 6 in einer ersten Pendelposition, in der der erste Ausgang 8 verschlossen ist. Der Ventilschließkörper 6 wird hierbei in entsprechender Weise an den Dichtsitz des Aufnahmetrichters 30 am ersten Ausgang 8 gedrückt, wie es anhand der Fig. 1C beschrieben ist. Somit strömt der Gesamtvolumenstrom Q am zweiten Ausgang 9 aus dem Ventilraum 5.

Wenn zu Beginn des Schaltvorgangs hingegen die erste Drehrichtung 20 gewählt ist, dann kommt es in analoger Weise zum Verschließen des zweiten Ausgangs 9, so dass der Gesamtvolumenstrom Q dann über den ersten Ausgang 8 erfolgt. Hierbei befindet sich der Ventilschließkörper 6 dann in einer zweiten Pendelposition, in der der zweite Ausgang 9 verschlossen ist.

Wenn der Ventilraum 5 anschließend wieder leerläuft, dann kommt es auch zum Absenken des Ventilschließkörpers 6 aufgrund der Schwerkraft.

Somit kann eine wesentliche Vereinfachung bei Umschalt- und/oder Umpumpsystemen gegenüber Lösungen mit einem Ventil oder einer Doppelpumpe erzielt werden, da die Schaltventilanordnung 1 passiv arbeitet, das heißt keinen eigenen Aktor benötigt. Gegenüber einer Lösung mit Doppelpumpe ergibt sich der Vorteil eines vollständigen Verschließens des nicht benötigten Kanals, so dass es nicht zu einem fehlerhaften Überströmen von Flüssigkeit kommen kann, was beispielsweise bei einem entsprechend hohen Gegendruck möglich ist. Solch ein hoher Gegendruck kann insbesondere in einer Abwasserleitung des wasserführenden Haushaltsgeräts aufgebracht werden. Vorteilhaft ist dies auch, wenn die Schaltventilanordnung 1 zum Aufschalten eines Speichertanks des wasserführenden Haushaltsgeräts zum Einsatz kommt. Gegenüber einer Ausgestaltung einer Waschmaschine mit Schwimmerkugel oder Abschlussklappe im Ablaufstrang zum Verhindern von Waschmittelverlust ergibt sich durch die Schaltventilanordnung 1 mit nur geringfügigem Mehraufwand ein Umpumpsystem.

Die Erfindung ist nicht auf die beschriebenen Ausführungsbeispiele beschränkt.

### Bezugszeichenliste

- 1: Schaltventilanordnung
- 2: Gehäuse
- 3: Ventil
- 4: Fördereinrichtung
- 5: Ventilraum
- 6: Ventilschließkörper
- 7: Kugeloberfläche
- 8: erster Ausgang
- 9: zweiter Ausgang
- 10: erster Eingang
- 11: zweiter Eingang
- 12: oberer Bereich
- 13: unterer Bereich
- 15: Radialpumpe
- 16: zweite Drehrichtung
- 17: Achse
- 18: erster Pumpenausgang
- 19: zweiter Pumpenausgang
- 20: erste Drehrichtung
- 21: Trennelement
- 22: Innenraum
- 23: Flüssigkeitsoberfläche
- 24: Richtung
- 25: horizontale Ebene
- 30, 31: Aufnahmetrichter
- 35: Befestigungsstelle

## Patentansprüche

1. Schaltventilanordnung (1) für ein wasserführendes Haushaltsgerät mit einem Ventilraum (5), einem in dem Ventilraum (5) angeordneten Ventilschließkörper (6), einem ersten Ausgang (8), einem zweiten Ausgang (9) und einem ersten Eingang (10), wobei der erste Ausgang (8), der zweite Ausgang (9) und der erste Eingang (10) dem Ventilraum (5) zugeordnet sind und wobei der erste Eingang (10) in einer Betriebslage unter einem oberen Bereich (12) des Ventilraums (5) angeordnet ist,
wobei in der Betriebslage der erste Ausgang (8) und der zweite Ausgang (9) in dem oberen Bereich (12) des Ventilraums (5) angeordnet sind, wobei ein zweiter Eingang (11) vorgesehen ist, der dem Ventilraum (5) zugeordnet ist, und wobei der zweite Eingang (11) in der Betriebslage unter dem oberen Bereich (12) des Ventilraums (5) angeordnet ist, wobei eine Fördereinrichtung (4) vorgesehen ist, die zum Einleiten von Flüssigkeit in den Ventilraum (5) die Flüssigkeit über sowohl den ersten Eingang (10) als auch den zweiten Eingang (11) in den Ventilraum (5) führt und wobei die Fördereinrichtung (4) ausgestaltet ist, einen Anteil eines ersten Volumenstroms (Q₁) der Flüssigkeit, mit dem die Fördereinrichtung (4) die Flüssigkeit über den ersten Eingang (10) in den Ventilraum (5) führt, beziehungsweise einen Anteil eines zweiten Volumenstroms (Q₂) der Flüssigkeit, mit dem die Fördereinrichtung (4) die Flüssigkeit über den zweiten Eingang (11) in den Ventilraum (5) führt, in Bezug auf einem Gesamtvolumenstrom (Q) der Flüssigkeit, mit dem die Fördereinrichtung (4) die Flüssigkeit in den Ventilraum (5) führt, zu ändern, wobei der erste Eingang (10) und der zweite Eingang (11) in einem unteren Bereich (13) des Ventilraums (5) vorgesehen sind,
**dadurch gekennzeichnet,**
**dass** der Ventilschließkörper (6) ein schwimmfähiger Ventilschließkörper (6) ist, wobei der erste Ausgang (8) so ausgestaltet ist, dass der sich durch Aufschwimmen auf einer in den Ventilraum (5) über den ersten Eingang (10) und/oder den zweiten Eingang (11) eingeleiteten Flüssigkeit an dem ersten Ausgang (8) befindende schwimmfähige Ventilschließkörper (6) an dem ersten Ausgang (8) fixiert ist und/oder wobei der erste Ausgang (8) einen Aufnahmetrichter (30) aufweist, der sich nach unten erweitert und/oder der zum zumindest teilweisen Aufnehmen des auf einer in den Ventilraum (5) über den ersten Eingang (10) und/oder den zweiten Eingang (11) eingeleiteten Flüssigkeit aufschwimmenden Ventilschließkörpers (6) dient, und/oder wobei der zweite Ausgang (9) so ausgestaltet ist, dass der sich durch Aufschwimmen auf einer in den Ventilraum (5) über den ersten Eingang (10) und/oder den zweiten Eingang (11) eingeleiteten Flüssigkeit an dem zweiten Ausgang (9) befindende schwimmfähige Ventilschließkörper (6) an dem zweiten Ausgang (9) fixiert ist und/oder wobei der zweite Ausgang (9) einen Aufnahmetrichter (31) aufweist, der sich nach unten erweitert und/oder der zum zumindest teilweisen Aufnehmen des auf einer in den Ventilraum (5) über den ersten Eingang (10) und/oder den zweiten Eingang (11) eingeleiteten Flüssigkeit aufschwimmenden Ventilschließkörpers (6) dient.

2. Schaltventilanordnung (1) für ein wasserführendes Haushaltsgerät mit einem Ventilraum (5), einem in dem Ventilraum (5) angeordneten Ventilschließkörper (6), einem ersten Ausgang (8), einem zweiten Ausgang (9) und einem ersten Eingang (10), wobei der erste Ausgang (8), der zweite Ausgang (9) und der erste Eingang (10) dem Ventilraum (5) zugeordnet sind und wobei der erste Eingang (10) in einer Betriebslage unter einem oberen Bereich (12) des Ventilraums (5) angeordnet ist,
wobei in der Betriebslage der erste Ausgang (8) und der zweite Ausgang (9) in dem oberen Bereich (12) des Ventilraums (5) angeordnet sind, wobei ein zweiter Eingang (11) vorgesehen ist, der dem Ventilraum (5) zugeordnet ist, und wobei der zweite Eingang (11) in der Betriebslage unter dem oberen Bereich (12) des Ventilraums (5) angeordnet ist, wobei eine Fördereinrichtung (4) vorgesehen ist, die zum Einleiten von Flüssigkeit in den Ventilraum (5) die Flüssigkeit über sowohl den ersten Eingang (10) als auch den zweiten Eingang (11) in den Ventilraum (5) führt und wobei die Fördereinrichtung (4) ausgestaltet ist, einen Anteil eines ersten Volumenstroms (Q₁) der Flüssigkeit, mit dem die Fördereinrichtung (4) die Flüssigkeit über den ersten Eingang (10) in den Ventilraum (5) führt, beziehungsweise einen Anteil eines zweiten Volumenstroms (Q₂) der Flüssigkeit, mit dem die Fördereinrichtung (4) die Flüssigkeit über den zweiten Eingang (11) in den Ventilraum (5) führt, in Bezug auf einem Gesamtvolumenstrom (Q) der Flüssigkeit, mit dem die Fördereinrichtung (4) die Flüssigkeit in den Ventilraum (5) führt, zu ändern, wobei der erste Eingang (10) und der zweite Eingang (11) in einem unteren Bereich (13) des Ventilraums (5) vorgesehen sind, **dadurch gekennzeichnet, dass** der Ventilschließkörper (6) ein schwimmfähiger Ventilschließkörper (6) ist, wobei der Ventilschließkörper (6) in dem oberen Bereich (12) des Ventilraums (5) zwischen dem ersten Ausgang (8) und dem zweiten Ausgang (9) pendelnd aufgehängt ist, wobei der Ventilschließkörper (6) in einer ersten Pendelposition den ersten Ausgang (8) verschließt und wobei der Ventilschließkörper (6) in einer zweiten Pendelposition den zweiten Ausgang (9) verschließt.

3. Schaltventilanordnung nach Anspruch 1 oder 2, **dadurch gekennzeichnet, dass** der erste Ausgang (8), der zweite Ausgang (9), der erste Eingang (10) und der zweite Eingang (11) in einer Projektion auf eine horizontale Ebene (25) so zueinander angeordnet sind,
dass entweder die Projektion (8') des ersten Ausgangs (8) und/oder die Projektion (9') des zweiten Ausgangs (9) in die horizontale Ebene (25) zumindest näherungsweise zwischen der Projektion (10') des ersten Eingangs (10) und der Projektion (11') des zweiten Eingangs (11) in die horizontale Ebene (25) liegen oder die die Projektion (10') des ersten Eingangs (10) und/oder die Projektion (11') des zweiten Eingangs (11) in die horizontale Ebene (25) zumindest näherungsweise zwischen der Projektion (8') des ersten Ausgangs (8) und der Projektion (9') des zweiten Ausgangs (9) in die horizontale Ebene (25) liegen.

4. Schaltventilanordnung nach einem der Ansprüche 1 bis 3, **dadurch gekennzeichnet, dass** der erste Ausgang (8), der zweite Ausgang (9), der erste Eingang (10) und der zweite Eingang (11) in einer Projektion auf eine horizontale Ebene (25) so zueinander angeordnet sind, dass die Projektion (8') des ersten Ausgangs (8) und die Projektion (9') des zweiten Ausgangs (9) in die horizontale Ebene (25) zumindest näherungsweise zwischen der Projektion (10') des ersten Eingangs (10) und der Projektion (11') des zweiten Eingangs (11) in die horizontale Ebene (25) liegen, wobei die Projektion (8') des ersten Ausgangs (8) in die horizontale Ebene (25) näher an der Projektion (10') des ersten Eingangs (10) in die horizontale Ebene (25) liegt als an der Projektion (11') des zweiten Eingangs (11) in die horizontale Ebene (25) und wobei die Projektion (9') des zweiten Ausgangs (9) in die horizontale Ebene (25) näher an der Projektion (11') des zweiten Eingangs (11) in die horizontale Ebene (25) liegt als an der Projektion (10') des ersten Eingangs (10) in die horizontale Ebene (25).

5. Schaltventilanordnung nach einem der vorherigen Ansprüche soweit rückbezogen auf Anspruch 1, **dadurch gekennzeichnet, dass** der Ventilraum (5) so ausgestaltet ist, dass der schwimmfähige Ventilschließkörper (6) bei einem Füllen des Ventilraums (5) über den ersten Eingang (10) und/oder den zweiten Eingang (11) mit einer Flüssigkeit von einem unteren Bereich (13) des Ventilraums (5) bis zu dem oberen Bereich (12) durch Aufschwimmen auf der Flüssigkeit bewegbar ist.

6. Schaltventilanordnung nach einem der vorherigen Ansprüche, **dadurch gekennzeichnet, dass** in einer ersten Betriebsart der Fördereinrichtung (4) der erste Volumenstrom (Q₁) der Flüssigkeit größer ist als der zweite Volumenstrom (Q₂) der Flüssigkeit und dass in einer zweiten Betriebsart der Fördereinrichtung (4) der erste Volumenstrom (Q₁) der Flüssigkeit kleiner ist als der zweite Volumenstrom (Q₂) der Flüssigkeit.

7. Schaltventilanordnung nach einem der vorherigen Ansprüche, **dadurch gekennzeichnet, dass** die Fördereinrichtung (4) so ausgestaltet ist, dass beim Einleiten von Flüssigkeit in den Ventilraum (5) der erste Volumenstrom (Q₁) stets positiv ist und der zweite Volumenstrom (Q₂) stets positiv ist.

8. Schaltventilanordnung nach einem der vorherigen Ansprüche, **dadurch gekennzeichnet, dass** die Fördereinrichtung (4) eine Radialpumpe (15) aufweist, dass eine erste Drehrichtung (20) der Radialpumpe (15) und eine zweite Drehrichtung (16) der Radialpumpe (15) wählbar sind, die gegenläufig zueinander orientiert sind, dass ein erster Pumpenausgang (18) der Radialpumpe (15), der zu dem ersten Eingang (10) führt, in der ersten Drehrichtung (20) orientiert ist und dass ein zweiter Pumpenausgang (19) der Radialpumpe (15), der zu dem zweiten Eingang (11) führt, in der zweiten Drehrichtung (16) der Radialpumpe (15) orientiert ist und/oder dass ein gemeinsames Gehäuse (2) vorgesehen ist, in dem der Ventilraum (5) ausgestaltet ist und in dem die Fördereinrichtung (4) untergebracht ist.

9. Schaltventilanordnung nach einem der Ansprüche 1 bis 8, **dadurch gekennzeichnet, dass** der erste Eingang (10) und der zweite Eingang (11) eine gemeinsame Öffnung am Ventilraum (5) bilden, wobei der erste und zweite Eingang jeweils einen Bereich der gemeinsamen Öffnung definieren, durch die jeweils Teilvolumenströme dem Ventilraum zugeführt werden und sich in einem Gesamtvolumenstrom in einer durch die Teilströme bedingten Richtung ausbilden.

10. Schaltventilanordnung nach Anspruch 9, **dadurch gekennzeichnet, dass** der erste Pumpenausgang (18) und der zweite Pumpenausgang (19) eine gemeinsame Öffnung bilden, die mit der gemeinsamen Öffnung des ersten Eingangs (10) und zweiten Eingangs (11) verbunden ist.

11. Wasserführendes Haushaltsgerät mit zumindest einer Schaltventilanordnung (1) nach einem der Ansprüche 1 bis 10.

## Claims

1. Switching-valve arrangement (1) for a water-carrying household appliance having a valve chamber (5), a valve closing element (6) arranged in the valve chamber (5), a first outlet (8), a second outlet (9) and a first inlet (10), wherein the first outlet (8), the second outlet (9) and the first inlet (10) are assigned to the valve chamber (5) and wherein the first inlet (10) is arranged below an upper region (12) of the valve chamber (5) in an operating position,
wherein in the operating position the first outlet (8) and the second outlet (9) are arranged in the upper region (12) of the valve chamber (5), wherein a second inlet (11) is provided that is assigned to the valve chamber (5), and wherein the second inlet (11) is arranged below the upper region (12) of the valve chamber (5) in the operating position, wherein a conveying device (4) is provided which, in order to introduce fluid into the valve chamber (5), conducts the fluid through both the first inlet (10) and also the second inlet (11) into the valve chamber (5) and wherein the conveying device (4) is designed to change a portion of a first volume flow (Qi) of the fluid, with which the conveying device (4) conducts the fluid through the first inlet (10) into the valve chamber (5), or a portion of a second volume flow (Q₂) of the fluid, with which the conveying device (4) conducts the fluid through the second inlet (11) into the valve chamber (5), in relation to a total volume flow (Q) of the fluid, with which the conveying device (4) conducts the fluid into the valve chamber (5), wherein the first inlet (10) and the second inlet (11) are provided in a lower region (13) of the valve chamber (5), **characterised in that** the valve closing element (6) is a buoyant valve closing element (6), wherein the first outlet (8) is designed such that the buoyant valve closing element (6) positioned at the first outlet (8) is fixed to the first outlet (8) by means of flotation on a fluid introduced into the valve chamber (5) through the first inlet (10) and/or the second inlet (11) and/or wherein the first outlet (8) has a receiver funnel (30) that extends in a downward direction and/or that serves to at least partially receive the valve closing element (6) floating on a fluid introduced into the valve chamber (5) through the first inlet (10) and/or the second inlet (11), and/or wherein the second outlet (9) is designed such that the buoyant valve closing element (6) positioned at the second outlet (9) is fixed to the second outlet (9) by means of flotation on a fluid introduced into the valve chamber (5) through the first inlet (10) and/or the second inlet (11) and/or wherein the second outlet (9) has a receiver funnel (31) that extends in a downward direction and/or that serves to at least partially receive the valve closing element (6) floating on a fluid introduced into the valve chamber (5) through the first inlet (10) and/or the second inlet (11).

2. Switching-valve arrangement (1) for a water-carrying household appliance having a valve chamber (5), a valve closing element (6) arranged in the valve chamber (5), a first outlet (8), a second outlet (9) and a first inlet (10), wherein the first outlet (8), the second outlet (9) and the first inlet (10) are assigned to the valve chamber (5) and wherein the first inlet (10) is arranged below an upper region (12) of the valve chamber (5) in an operating position,
wherein in the operating position the first outlet (8) and the second outlet (9) are arranged in the upper region (12) of the valve chamber (5), wherein a second inlet (11) is provided that is assigned to the valve chamber (5), and wherein the second inlet (11) is arranged below the upper region (12) of the valve chamber (5) in the operating position, wherein a conveying device (4) is provided which, in order to introduce fluid into the valve chamber (5), conducts the fluid through both the first inlet (10) and also the second inlet (11) into the valve chamber (5) and wherein the conveying device (4) is designed to change a portion of a first volume flow (Q₁) of the fluid, with which the conveying device (4) conducts the fluid through the first inlet (10) into the valve chamber (5), or a portion of a second volume flow (Q₂) of the fluid, with which the conveying device (4) conducts the fluid through the second inlet (11) into the valve chamber (5), in relation to a total volume flow (Q) of the fluid, with which the conveying device (4) conducts the fluid into the valve chamber (5), wherein the first inlet (10) and the second inlet (11) are provided in a lower region (13) of the valve chamber (5), **characterised in that** the valve closing element (6) is a buoyant valve closing element (6), wherein the valve closing element (6) is suspended in a pendular manner between the first outlet (8) and the second outlet (9) in the upper region (12) of the valve chamber (5), wherein in a first pendular position the valve closing element (6) closes the first outlet (8) and wherein in a second pendular position the valve closing element (6) closes the second outlet (9).

3. Switching-valve arrangement according to claim 1 or 2, **characterised in that** the first outlet (8), the second outlet (9), the first inlet (10) and the second inlet (11) are arranged relative to each other in a projection onto a horizontal plane (25) such that either the projection (8') of the first outlet (8) and/or the projection (9') of the second outlet (9) into the horizontal plane (25) lie at least approximately between the projection (10') of the first inlet (10) and the projection (11') of the second inlet (11) into the horizontal plane (25) or the projection (10') of the first inlet (10) and/or the projection (11') of the second inlet (11) into the horizontal plane (25) lie at least approximately between the projection (8') of the first outlet (8) and the projection (9') of the second outlet (9) into the horizontal plane (25).

4. Switching-valve arrangement according to one of claims 1 to 3, **characterised in that** the first outlet (8), the second outlet (9), the first inlet (10) and the second inlet (11) are arranged relative to each other in a projection onto a horizontal plane (25) such that the projection (8') of the first outlet (8) and the projection (9') of the second outlet (9) into the horizontal plane (25) lie at least approximately between the projection (10') of the first inlet (10) and the projection (11') of the second inlet (11) into the horizontal plane (25), wherein the projection (8') of the first outlet (8) into the horizontal plane (25) lies closer to the projection (10') of the first inlet (10) into the horizontal plane (25) than to the projection (11') of the second inlet (11) into the horizontal plane (25) and wherein the projection (9') of the second outlet (9) into the horizontal plane (25) lies closer to the projection (11') of the second inlet (11) into the horizontal plane (25) than to the projection (10') of the first inlet (10) into the horizontal plane (25).

5. Switching-valve arrangement according to one of the preceding claims when dependent on claim 1, **characterised in that** the valve chamber (5) is designed such that when the valve chamber (5) is filled through the first inlet (10) and/or the second inlet (11) with a fluid, the buoyant valve closing element (6) can be moved, by means of flotation on the fluid, from a lower region (13) of the valve chamber (5) up to the upper region (12).

6. Switching-valve arrangement according to one of the preceding claims, **characterised in that** in a first operating mode of the conveying device (4), the first volume flow (Q₁) of the fluid is greater than the second volume flow (Q₂) of the fluid, and **in that** in a first second mode of the conveying device (4), the first volume flow (Q₁) of the fluid is less than the second volume flow (Q₂) of the fluid.

7. Switching-valve arrangement according to one of the preceding claims, **characterised in that** the conveying device (4) is designed such that when fluid is introduced into the valve chamber (5) the first volume flow (Q₁) is always positive and the second volume flow (Q₂) is always positive.

8. Switching-valve arrangement according to one of the preceding claims, **characterised in that** the conveying device (4) has a radial-flow pump (15), **in that** a first direction of rotation (20) of the radial-flow pump (15) and a second direction of rotation (16) of the radial-flow pump (15) can be selected that are oriented opposite to one another, **in that** a first pump outlet (18) of the radial-flow pump (15) that leads to the first inlet (10) is oriented in the first direction of rotation (20), and **in that** a second pump outlet (19) of the radial-flow pump (15) that leads to the second inlet (11) is oriented in the second direction of rotation (16) of the radial-flow pump (15), and/or **in that** a shared housing (2) is provided in which the valve chamber (5) is embodied and in which the conveying device (4) is accommodated.

9. Switching-valve arrangement according to one of claims 1 to 8, **characterised in that** the first inlet (10) and the second inlet (11) form a shared opening on the valve chamber (5), wherein the first and second inlet each define one region of the shared opening through which in each case partial volume flows are fed into the valve chamber, and which form into a total volume flow in a direction determined by the partial flows.

10. Switching-valve arrangement according to claim 9, **characterised in that** the first pump outlet (18) and the second pump outlet (19) form a shared opening that is connected to the shared opening of the first inlet (10) and second inlet (11).

11. Water-carrying household appliance having at least one switching-valve arrangement (1) according to one of claims 1 to 10.

## Revendications

1. Agencement de soupape de commande (1) pour un appareil ménager à circulation d'eau avec une chambre de soupape (5), un obturateur de soupape (6) disposé dans la chambre de soupape (5), une première sortie (8), une deuxième sortie (9) et une première entrée (10), dans lequel la première sortie (8), la deuxième sortie (9) et la première entrée (10) sont affectées à la chambre de soupape (5) et dans lequel la première entrée (10) est, dans une position de fonctionnement, disposée sous une zone supérieure (12) de la chambre de soupape (5), dans lequel la première sortie (8) et la deuxième sortie (9) sont, dans la position de fonctionnement positionnées dans la zone supérieure (12) de la chambre de soupape (5), dans lequel une deuxième entrée (11) est prévue, laquelle est affectée à la chambre de soupape (5), et dans lequel la deuxième entrée (11) est, dans la position de fonctionnement, disposée sous la zone supérieure (12) de la chambre de soupape (5), dans lequel un dispositif d'entraînement (4) est prévu, qui, pour l'introduction de fluide dans la chambre de soupape (5), mène le fluide à la fois à travers la première entrée (10) et la deuxième entrée (11) dans la chambre de soupape (5) et dans lequel le dispositif d'entraînement (4) est aménagé afin de modifier une quotité d'un premier débit volumique (Q1) du fluide, selon lequel le dispositif d'entraînement (4) mène le fluide à travers la première entrée (10) dans la chambre de soupape (5), respectivement une quotité d'un deuxième débit volumique (Q2) du fluide, selon lequel le dispositif d'entraînement (4) mène le fluide à travers la deuxième entrée (11) dans la chambre de soupape (5), par rapport à un débit volumique total (Q) du fluide, selon lequel le dispositif d'entraînement (4) mène le fluide dans la chambre de soupape (5), dans lequel la première sortie (10) et la deuxième sortie (11) sont prévues dans une zone inférieure (13) de la chambre de soupape (5), **caractérisé en ce que** l'obturateur de soupape (6) est un obturateur de soupape flottant (6), dans lequel la première sortie (8) est aménagée de telle sorte que l'obturateur de soupape (6) flottant se trouvant à la première sortie (8) est fixé, par flottaison sur un fluide introduit dans la chambre de soupape (5) via la première entrée (10) et/ou la deuxième entrée (11), à la première sortie (8) et/ou dans lequel la première sortie (8) présente un entonnoir de réception (30), qui s'élargit vers le bas et/ou qui sert à l'accueil au moins partiel de l'obturateur de soupape (6) flottant sur un fluide introduit dans la chambre de soupape (5) via la première entrée (10) et/ou la deuxième entrée (11) et/ou dans lequel la deuxième sortie (9) est aménagée de telle sorte que l'obturateur de soupape flottant (6) se trouvant à la deuxième sortie (9) est fixé, par flottaison sur un fluide introduit dans la chambre de soupape (5) via la première entrée (10) et/ou la deuxième entrée (11), à la deuxième sortie (9) et/ou dans lequel la deuxième sortie (9) présente un entonnoir de réception (31) qui s'élargit vers le bas et/ou qui sert à l'accueil au moins partiel de l'obturateur de soupape (6) flottant sur un fluide introduit dans la chambre de soupape (5) via la première entrée (10) et/ou la deuxième entrée (11).

2. Agencement de soupape de commande (1) pour un appareil ménager à circulation d'eau avec une chambre de soupape (5), un obturateur de soupape (6) disposé dans la chambre de soupape (5), une première sortie (8), une deuxième sortie (9) et une première entrée (10), dans lequel la première sortie (8), la deuxième sortie (9) et la première entrée (10) sont affectées à la chambre de soupape (5) et dans lequel la première entrée (10) est, dans une position de fonctionnement, disposée sous une zone supérieure (12) de la chambre de soupape (5), dans lequel la première sortie (8) et la deuxième sortie (9) sont, dans la position de fonctionnement, positionnées dans la zone supérieure (12) de la chambre de soupape (5), dans lequel une deuxième entrée (11) est prévue, laquelle est affectée à la chambre de soupape (5), et dans lequel la deuxième entrée (11) est, dans la position de fonctionnement, disposée sous la zone supérieure (12) de la chambre de soupape (5), dans lequel un dispositif d'entraînement (4) est prévu, qui, pour l'introduction de fluide dans la chambre de soupape (5), mène le fluide à la fois à travers la première entrée (10) et la deuxième entrée (11) dans la chambre de soupape (5) et dans lequel le dispositif d'entraînement (4) est aménagé afin de modifier une quotité d'un premier débit volumique (Q1) du fluide, selon lequel le dispositif d'entraînement (4) mène le fluide à travers la première entrée (10) dans la chambre de soupape (5), respectivement une quotité d'un deuxième débit volumique (Q2) du fluide, selon lequel le dispositif d'entraînement (4) mène le fluide à travers la deuxième entrée (11) dans la chambre de soupape (5), par rapport à un débit volumique total (Q) du fluide, selon lequel le dispositif d'entraînement (4) mène le fluide dans la chambre de soupape (5), dans lequel la première sortie (10) et la deuxième sortie (11) sont prévues dans une zone inférieure (13) de la chambre de soupape (5), **caractérisé en ce que** l'obturateur de soupape (6) est un obturateur de soupape flottant (6), dans lequel l'obturateur de soupape (6) est suspendu en oscillation dans la zone supérieure (12) de la chambre de soupape (5) entre la première sortie (8) et la deuxième sortie (9), dans lequel l'obturateur de soupape (6) obture la première sortie (8) dans une première position d'oscillation et dans lequel l'obturateur de soupape (6) obture la deuxième sortie (9) dans une deuxième position d'oscillation.

3. Agencement de soupape de commande selon la revendication 1 ou 2, **caractérisé en ce que** la première sortie (8), la deuxième sortie (9), la première entrée (10) et la deuxième entrée (11) sont disposées de telle sorte l'une par rapport à l'autre dans une projection sur un plan horizontal (25) que la projection (8') de la première sortie (8) et/ou la projection (9') de la deuxième sortie (9) dans le plan horizontal (25) se trouvent au moins approximativement entre la projection (10') de la première entrée (10) et la projection (11') de la deuxième entrée (11) dans le plan horizontal (25) ou la projection (10') de la première entrée (10) et/ou la projection (11') de la deuxième entrée (11) dans le plan horizontal (25) se trouvent au moins approximativement entre la projection (8') de la première sortie (8) et la projection (9') de la deuxième sortie (9) dans le plan horizontal (25).

4. Agencement de soupape de commande selon l'une des revendications 1 à 3, **caractérisé en ce que** la première sortie (8), la deuxième sortie (9), la première entrée (10) et la deuxième entrée (11) sont disposées de telle sorte l'une par rapport à l'autre dans une projection sur un plan horizontal (25) que la projection (8') de la première sortie (8) et/ou la projection (9') de la deuxième sortie (9) dans le plan horizontal (25) se trouvent au moins approximativement entre la projection (10') de la première entrée (10) et la projection (11') de la deuxième entrée (11) dans le plan horizontal (25), dans lequel la projection (8') de la première sortie (8) dans le plan horizontal (25) se trouve plus près de la projection (10') de la première entrée (10) dans le plan horizontal (25) que de la projection (11') de la deuxième entrée (11) dans le plan horizontal (25) et dans lequel la projection (9') de la deuxième sortie (9) dans le plan horizontal (25) se trouve plus près de la projection (11') de la deuxième entrée (11) dans le plan horizontal (25) que de la projection (10') de la première entrée (10) dans le plan horizontal (25) .

5. Agencement de soupape de commande selon l'une des revendications précédentes en lien avec la revendication 1, **caractérisé en ce que** la chambre de soupape (5) est aménagée de telle sorte que l'obturateur de soupape flottant (6) est déplaçable par flottaison sur le fluide lors d'un remplissage de la chambre de soupape (5) via la première entrée (10) et/ou la deuxième entrée (11) par un fluide d'une zone inférieure (13) de la chambre de soupape (5) à la zone supérieure (12).

6. Agencement de soupape de commande selon l'une des revendications précédentes, **caractérisé en ce que** dans un premier mode de fonctionnement du dispositif d'entraînement (4), le premier débit volumique (Q1) du fluide est supérieur au deuxième débit volumique (Q2) du fluide et **en ce que** dans un deuxième mode de fonctionnement du dispositif d'entraînement (4), le premier débit volumique (Q1) du fluide est inférieur au deuxième débit volumique (Q2) du fluide.

7. Agencement de soupape de commande selon l'une des revendications précédentes, **caractérisé en ce que** le dispositif d'entraînement (4) est aménagé de telle sorte que lors de l'introduction de fluide dans la chambre de soupape (5), le premier débit volumique (Q1) est constamment positif et le deuxième débit volumique (Q2) est constamment positif.

8. Agencement de soupape de commande selon l'une des revendications précédentes, **caractérisé en ce que** le dispositif d'entraînement (4) présente une pompe radiale (15), **en ce qu'**un premier sens de rotation (20) de la pompe radiale (15) et un deuxième sens de rotation (16) de la pompe radiale (15) opposés l'une à l'autre sont sélectionnables, **en ce qu'**une première sortie de pompe (18) de la pompe radiale (15) menant à la première entrée (10) est orientée dans le premier sens de rotation (20) et **en ce qu'**une deuxième sortie de pompe (19) de la pompe radiale (15) menant à la deuxième entrée (11) est orientée dans le deuxième sens de rotation (16) de la pompe radiale (15) et/ou **en ce qu'**un carter commun (2) est prévu, dans lequel la chambre de soupape (5) est aménagée et dans lequel le dispositif d'entraînement (4) est logé.

9. Agencement de soupape de commande selon l'une des revendications 1 à 8, **caractérisé en ce que** la première entrée (10) et la deuxième entrée (11) constituent un orifice commun de la chambre de soupape (5), la première et la deuxième entrée définissant respectivement une zone de l'orifice commune à travers laquelle les débits volumiques partiels respectifs sont véhiculés vers la chambre de soupape et constituent un débit volumique global dans une direction conditionnée par les flux partiels.

10. Agencement de soupape de commande selon la revendication 9, **caractérisé en ce que** la première sortie de pompe (18) et la deuxième sortie de pompe (19) constituent un orifice commun relié à l'orifice commun de la première entrée (10) et de la deuxième entrée (11).

11. Appareil ménager à circulation d'eau avec au moins un agencement de soupape de commande (1) selon l'une des revendications 1 à 10.
